# FASCICULE DE BREVET EUROPEEN

(11) **EP 3 765 416 B1**
(45) Date de publication et mention de la délivrance du brevet: **13.03.2024**
(21) Numéro de dépôt: 19715178.0
(22) Date de dépôt: 13.03.2019
(51) Int. Cl.: C03B 5/167, C03B 5/235, F23D 14/02, C22C 38/44, C22C 38/04, C22C 38/02

(54) **BRÛLEUR IMMERGE, FOUR DE FUSION DE VERRE, PROCÉDÉ DE FUSION DE MATIÈRES VITRIFIABLES**
TAUCHBRENNER, GLASSCHMELZOFEN, VERFAHREN ZUM SCHMELZEN VON VERGLASBAREN MATERIALIEN
IMMERSED BURNER, GLASS MELTING FURNACE, PROCESS FOR MELTING VITRIFIABLE MATERIALS

(30) Priorité: 16.03.2018 FR 1870300; 23.03.2018 FR 1852554
(43) Date de publication de la demande: 20.01.2021
(73) Titulaire: SAINT-GOBAIN ISOVER, 92400 Courbevoie (FR)
(72) Inventeur: CONDOLF, Cyril, 78700 CONFLANS-SAINTE-HONORINE (FR); GUILLET, Antoine, 75019 PARIS (FR)
(74) Mandataire: Saint-Gobain Recherche
(86) Numéro de dépôt international: PCT/FR2019/050551
(87) Numéro de publication internationale: WO 2019/175505

(56) Documents cités:
- WO-A1-2013/117851
- US-A1- 2016 060 154
- US-A1- 2016 107 914
- S D Washko ET AL: "Wrougt Stainless Steels" In: "PROPERTIES AND SELECTION : IRONS, STEELS & HIGH PERFORMANCE ALLOYS.", 1 mars 1990 (1990-03-01), Metals Park, Ohio : American Society for Metals, US 016775, XP055501780, ISBN: 978-0-87170-377-4 pages 841-848, le document en entier
- BABKINA V YU ET AL: "Behavior of structural materials during production of calcium chloride in an immersion burner apparatus", 1 janvier 1972 (1972-01-01), ISSLEDOVANIJA V OBLASTI ZASCITY METALLOV OT KORROZII V PROIZVODSTVE KAL'CINIROVANNOJ SODY I SODOPRODUKTOV, ISSLED. OBL. ZASHCH. MET. KORROZ. PROIZVOD. KALYTSINIROVANNOI SODY SODOPRODUKTOV (1972), 89-94. EDITOR(S): LOS, T. A.; BARANOV, V. M. PUBLISHER, XP009507603, le document en entier

## Description

La présente invention concerne un brûleur destiné à être utilisé en tant que brûleur immergé dans un four de fusion de verre ou de roche, en particulier à des températures suffisamment élevées pour permettre la fusion de roche.

La fusion de roche se fait traditionnellement dans des fours de type cubilot chauffés au coke. La fusion de la roche nécessite des températures significativement plus élevées que la fusion de verre, qui peuvent aller jusqu'à 1550°C.

Depuis quelques années cependant, la composition de la roche utilisée a été modifiée dans le sens d'une diminution de la température de fusion comme décrit dans la publication WO2017/060637. Cependant des températures de l'ordre de 1450°C à 1500°C en sortie du four sont encore nécessaires pour assurer la fusion de telles roches.

A de telles températures, on observe une usure prématurée des céramiques réfractaires généralement utilisées dans les fours. Cette usure peut être évitée grâce à l'utilisation d'un four à parois métalliques nues muni de brûleurs immergés, refroidis en continu par un système de circulation d'un liquide de refroidissement (chemise d'eau, en anglais *waterjacket*).

Le concept de combustion immergée n'est pas nouveau. Par exemple des brûleurs appropriés pour une utilisation dans la fusion de matériaux à température de fusion élevée, tels que le verre ou la roche sont décrits dans la demande US2005236747. On connait ainsi des procédés et des dispositifs permettant la fusion de verre ou de matériaux similaires dans lesquels un brûleur est directement immergé dans le bain fondu de matière. Les gaz chauds agitent le verre, transférant un pourcentage élevé de chaleur au verre ou à la roche, les faisant ainsi rapidement fondre.

Plus particulièrement, un bruleur immergé classique est constitué d'un système de conduites permettant à un liquide de refroidissement, généralement de l'eau, de circuler à l'intérieur du brûleur, de manière à réduire significativement la corrosion du métal constitutif de celui-ci. La conséquence du refroidissement est la formation d'une couche de verre ou de roche entre la couche fondue et les parois métalliques, couche qui semble agir comme une couche protectrice contre l'oxydation du métal.

Un exemple de ce brûleur est notamment décrit dans la demande WO2013/117851. Dans cette publication de la demanderesse, on décrit un brûleur pour four comprenant une pluralité d'injecteurs alignés, chaque injecteur comprenant une chambre de mélange en forme de cylindre, avec un orifice d'éjection, une conduite d'alimentation en combustible et une conduite d'alimentation en comburant débouchant dans la chambre de mélange au niveau de l'enveloppe du cylindre selon une direction provoquant un écoulement tangentiel du combustible et du comburant par rapport à l'enveloppe du cylindre, et un système de conduites permettant de faire circuler un fluide de refroidissement à l'intérieur du brûleur. Un tel bruleur est typiquement, mais pas uniquement, du type de ceux susceptibles d'être utilisés selon la présente invention. Pour plus de détails, on se référera aux figures 1 à 3 décrites dans cette publication et à la description associée de la publication WO2013/117851 A1.

Selon une autre réalisation particulière d'un brûleur selon l'invention, celui-ci peut également être cylindrique, notamment du type de celui décrit par exemple dans la publication US2005236747.

Malgré des avancées significatives en termes de durabilité des brûleurs, liées à une telle architecture, il existe en permanence un besoin de prolonger la durée de vie des brûleurs pour éviter ainsi des phases coûteuses de changement nécessitant l'arrêt de l'installation, en plus du coût du brûleur luimême.

US 2016/107914 A1 divulgue un brûleur immergé pour la fusion de verre où le tube, la buse , le mélangeur statique du brûleur peuvent être en acier inoxydable, incluant les types 304 ou 312.

La présente invention a ainsi pour objet de proposer un brûleur immergé utilisable dans un four de fusion du verre ou de roche. Le brûleur immergé pour four de fusion de verre ou de roche selon l'invention est défini dans la revendication indépendante 1. Le four de fusion de verre selon l'invention est défini défini dans la revendication indépendante 12. Le procédé de fusion de matières vitrifiables selon l'invention est défini dans la revendication indépendante 13. Les modes de réalisation préférés sont définis dans les revendications dépendantes.

Le brûleur selon l'invention se caractérise en ce qu'il est fait dans un alliage spécifique lui permettant d'augmenter sa durée de vie dans ses conditions habituelles d'usage. Plus précisément, la présente invention se rapporte selon un premier aspect à un brûleur pour four de fusion de verre ou de roche, ledit brûleur étant au moins pour partie, et de préférence en totalité, constitué d'un alliage présentant la composition suivante, en pourcentage pondéral de l'alliage :

| | |
|---|---|
| Cr | 11 à 22% |
| Ni | 5 à 20% |
| Mo | moins de 6%, de préférence moins de 5% |
| Mn | moins de 3%, de préférence moins de 2% |
| Si | moins de 2%, de préférence moins de 1% |
| N | moins de 0,2 %, de préférence moins de 0,1% |
| P | moins de 0,1 %, de préférence moins de 0,05% |
| S | moins de 0,05%, |

le reste étant constitué par du fer et du carbone et des impuretés inévitables, ledit alliage étant caractérisé en ce que le rapport massique Cr/C dans ledit alliage est supérieur à 500 de manière préférée supérieur à 530, de manière préférée encore supérieure à 550, ou même de manière très préférée supérieure à 600.

Selon un mode de réalisation avantageux, le rapport massique Cr/C et inférieur à 850.

Ainsi, alors que de manière classique dans le domaine, on considère que la quantité de carbone dans un acier doit être suffisant pour favoriser la formation d'une quantité suffisante de carbures de chrome, la société déposante a constatée qu'un alliage relativement appauvri en carbone par rapport à son taux global de chrome pouvait être avantageusement utilisé dans la constitution de brûleurs pour four de fusion de verre ou de roche. Une telle utilisation se traduit avantageusement par une augmentation sensible de la durée de vie de tels brûleurs.

Selon d'autres modes de réalisation avantageux de l'invention :
- l'alliage comprend moins de 0,045% poids de carbone ;
- l'alliage comprend moins de 0,040% poids de carbone ;
- l'alliage comprend moins de 0,035% poids de carbone ;
- l'alliage comprend moins de 0,030% poids de carbone ;
- l'alliage comprend entre 7 et 16% poids de nickel ; de préférence encore entre 8 et 15% de nickel ;
- l'alliage comprend entre 15 et 22% poids de chrome ; de préférence encore entre 17 et 20% de chrome ;
- l'alliage comprend entre 60 et 75 % poids de fer ;
- l'alliage comprend moins de 5% poids de molybdène ;
- l'alliage comprend entre 1 et 5% poids de molybdène ;
- l'alliage comprend, en pourcentage pondéral:

| | |
|---|---|
| Cr | 17 à 20% |
| Ni | 8 à 10% |
| Mo | moins de 1%, de préférence moins de 0,1% |
| Mn | moins de 3% |
| Si | moins de 2% |
| N | moins de 0,2 % |
| P | moins de 0,1 % |

Un tel alliage peut comprendre moins de 0,045% poids de carbone, voire moins de 0,040% poids de carbone ou encore moins de 0,035% poids de carbone.
- l'alliage comprend, en pourcentage pondéral:

| | |
|---|---|
| Cr | 17 à 20% |
| Ni | 10 à 15% |
| Mo | entre 2 et 4% |
| Mn | moins de 3% |
| Si | moins de 2%, de préférence moins de 1% |
| N | moins de 0,2 % |
| P | moins de 0,1 % |

Un tel alliage peut comprendre moins de 0,035% poids de carbone, voire moins de 0,030% poids de carbone.

L'invention se rapporte également à un brûleur immergé tel que décrit précédemment, comprenant :
- une pluralité d'injecteurs alignés, chaque injecteur comprenant une chambre de mélange en forme de cylindre, avec un orifice d'éjection, une conduite d'alimentation en combustible et une conduite d'alimentation en comburant débouchant dans la chambre de mélange au niveau de l'enveloppe du cylindre selon une direction provoquant un écoulement tangentiel du combustible et du comburant par rapport à l'enveloppe du cylindre, et
- un système de conduites permettant de faire circuler un fluide de refroidissement à l'intérieur du brûleur.

Le brûleur est utilisé en tant que brûleur immergé, de telle façon qu'il soit de préférence installé au niveau de la sole du four, de préférence encore de manière à ce que les orifices d'éjection sont à peu près au même niveau que la surface de la sole du four. Par exemple, les flancs métalliques et cloisons peuvent être en relief par rapport à la surface de la sole.

D'autres configurations du brûleur sont envisageables et l'homme du métier pourra les choisir de toute manière lui permettant d'obtenir la fusion homogène des matières vitrifiables, par exemple selon les principes décrits dans la demande US2005236747.

En outre la présente invention se rapporte à un four de fusion de verre avec une zone d'introduction des matières vitrifiables, une zone de sortie de la matière fondue et, entre ces zones, une zone d'écoulement de la matière fondue, ledit four comprenant dans la zone d'écoulement de la matière fondue au moins un brûleur immergé tel que décrit précédemment.

Comme expliqué en introduction, le four de la présente invention est de préférence utilisé pour la fusion de roche à des températures élevées, de l'ordre de 1400 à 1600 °C, supérieures à celles nécessaires à la fusion de verre. A ces températures, les céramiques réfractaires utilisées classiquement en tant que matériaux d'isolation thermique dans des fours à verre, sont soumises à une usure excessive.

Bien que rien ne s'oppose en principe à l'utilisation des brûleurs de la présente invention dans des fours usuels comportant des matériaux isolants réfracteurs, ces brûleurs sont particulièrement utiles dans des fours fonctionnant à haute température. Dans un mode de réalisation préféré, le four de la présente invention comporte par conséquent des parois métalliques nues, par exemple en acier chaudière A42CP, directement en contact avec la matière en fusion et est essentiellement dépourvu de matériaux isolants en céramique réfractaire, au moins dans les zones immergées du four qui sont en contact avec le bain de verre ou de roche. La voute du four de la présente invention peut éventuellement être isolée au moyen de matériaux réfractaires, bien qu'il ne s'agisse pas d'un mode de réalisation préféré.

Le four, comme le brûleur, comporte de préférence au moins un système de conduites internes permettant de faire circuler un fluide de refroidissement à l'intérieur des parois du four. Ces conduites refroidissent avantageusement l'ensemble des zones en contact avec le bain des matières en fusion, dépourvues de matériaux isolants réfractaires.

Enfin, la présente invention se rapporte à un procédé de fusion de matières vitrifiables utilisant un brûleur tel que décrit précédemment, ledit procédé comprenant,
- l'introduction de matières vitrifiables dans la zone d'introduction de matières vitrifiables du four,
- l'alimentation du ou des brûleurs immergés avec un combustible gazeux, de préférence du gaz naturel, et avec un comburant gazeux, de préférence de l'oxygène,
- le soutirage de la matière fondue dans la zone de sortie des matières fondues, et
- la circulation d'un liquide de refroidissement, de préférence de l'eau, dans les systèmes de conduites prévus à cet effet dans les parois du four et/ou dans le brûleur.

Dans un tel procédé, les matières vitrifiables comprennent en général de la roche, de préférence de la roche basaltique.

En général, la température de la roche fondue, immédiatement en amont de la zone de sortie du verre fondu, est comprise entre 1400 °C et 1600 °C.

Les matières vitrifiables comprennent avantageusement une certaine fraction de roche, de préférence de la roche basaltique. Cette fraction est avantageusement au moins égale à 40 %.

La roche basaltique nécessite en particulier des températures de fusion supérieures à celles du verre à base de silice, la température de la roche en fusion (immédiatement en amont de la zone de sortie du four) est de préférence comprise entre 1400 °C et 1600 °C, en particulier entre 1450 °C et 1550 °C.

L'invention et ses avantages sont illustrés par les exemples qui suivent.

### Exemples :

Dans ces exemples, on a synthétisé des brûleurs conformément à l'enseignement de la publication WO2013/117851.

Selon un premier exemple 1 comparatif, on a utilisé pour la fabrication d'un premier brûleur, un alliage tel que décrit dans la publication WO2013/117851 dans lequel le rapport massique Cr/C est égal à 208.

Selon un deuxième exemple 2, on a utilisé, pour la fabrication d'un deuxième brûleur selon la présente invention, un alliage présentant une composition d'un acier réfractaire dans lequel le rapport massique Cr/C est égal à 566.

Les compositions des alliages constituants les deux brûleurs sont reportées dans le tableau 1 qui suit :

**Tableau 1**

| Composition | Exemple 1 (art antérieur) | Exemple 2 (invention) |
|---|---|---|
| C | 0,12 % | 0,03 % |
| Cr | 25 % | 17 % |
| Ni | 19 % | 12 % |
| Si | 0,5 % | 0,5 % |
| Mo | - | 2,0 % |
| Mn | 2,0% | 2,0 % |
| P | 0,04 % | 0,04 % |
| S | 0,03 % | 0,03 % |
| Fe | reste | reste |

Les deux brûleurs ont été utilisés dans un à bruleur immergé du type de celui décrit dans la demande WO2013/117851, pour la fusion d'une composition de roche.

La composition fondue est à base de basalte, de bauxite, de diabase, de dolomite et dépourvu de laitier a été fondu dans un four à brûleur immergé. Le bain fondu a été fibré par centrifugation externe pour obtenir des fibres minérales présentant une composition chimique comprenant les constituants suivants, en pourcentages pondéraux :

| | |
|---|---|
| SiO₂ | envion 40 % |
| Al₂O₃ | environ 15% |
| CaO | environ 15% |
| MgO | environ 10 % |
| Fe₂O₃ | environ 10 % |
| Na₂O | moins de 4% % |
| K₂O | moins de 2 % |
| TiO₂ | moins de 2% % |

La fusion est opérée dans des conditions telles que le liquide fondu a une température de 1450°C en sortie du four.

Pour chacune des compositions d'alliage, les brûleurs ont été testés en conditions industrielles. On a reporté dans le tableau 2 ci-après la durée de vie des brûleurs utilisés. On considère qu'un brûleur n'est plus utilisable en conditions industrielles lorsqu'on constate une fuite au niveau des injecteurs.

**Tableau 2**

| | Exemple 1 | Exemple 2 |
|---|---|---|
| Durée de vie moyenne du brûleur (jours) | 138 | >314 |

Les exemples reportés ci-dessus montrent que le brûleur selon l'invention, dans lequel le rapport Cr/C est maximisé, présente une durée de vie bien supérieure.

## Revendications

1. Brûleur immergé pour four de fusion de verre ou de roche, ledit brûleur étant au moins pour partie, et de préférence en totalité, constitué d'un alliage présentant la composition suivante, en pourcentage pondéral de l'alliage :
| | |
|---|---|
| Cr | 11 à 22% |
| Ni | 5 à 20% |
| Mo | moins de 6%, |
| Mn | moins de 3%, |
| Si | moins de 2%, |
| N | moins de 0,2 %, |
| P | moins de 0,1 %, |
| S | moins de 0,05%, |
le reste étant constitué par du fer, du carbone et des impuretés inévitables, ledit alliage étant **caractérisé en ce que** le rapport massique Cr/C dans ledit alliage est supérieur à 500.

2. Brûleur immergé selon la revendication 1, dans lequel le rapport massique Cr/C dans ledit alliage est supérieur à 530.

3. Brûleur immergé selon l'une des revendications précédentes, dans lequel l'alliage comprend moins de 0,040% poids de carbone.

4. Brûleur immergé selon l'une des revendications précédentes, dans lequel l'alliage comprend entre 7 et 16% poids de nickel.

5. Brûleur immergé selon l'une des revendications précédentes, dans lequel l'alliage comprend entre 15 et 22% poids de chrome.

6. Brûleur immergé selon l'une des revendications précédentes, dans lequel l'alliage comprend entre 60 et 75 % poids de fer.

7. Brûleur immergé selon l'une des revendications précédentes, dans lequel l'alliage comprend moins de 5% poids de molybdène.

8. Brûleur immergé selon l'une des revendications précédentes, dans lequel l'alliage comprend entre 1 et 5% poids de molybdène.

9. Brûleur immergé selon l'une des revendications 1 à 7, dans lequel l'alliage comprend, en pourcentage pondéral de l'alliage:
| | |
|---|---|
| Cr | 17 à 20% |
| Ni | 8 à 10% |
| Mo | moins de 1%, de préférence moins de 0,1% |
| Mn | moins de 3% |
| Si | moins de 2% |
| N | moins de 0,2 % |
| P | moins de 0,1 %. |

10. Brûleur immergé selon l'une des revendications 1 à 8, dans lequel l'alliage comprend, en pourcentage pondéral de l'alliage :
| | |
|---|---|
| Cr | 17 à 20% |
| Ni | 10 à 15% |
| Mo | entre 2 et 4% |
| Mn | moins de 3% |
| Si | moins de 2%, de préférence moins de 1% |
| N | moins de 0,2 % |
| P | moins de 0,1 %. |

11. Brûleur immergé selon l'une des revendications précédentes, comprenant :
- une pluralité d'injecteurs alignés, chaque injecteur comprenant une chambre de mélange en forme de cylindre, avec un orifice d'éjection, une conduite d'alimentation en combustible et une conduite d'alimentation en comburant débouchant dans la chambre de mélange au niveau de l'enveloppe du cylindre selon une direction provoquant un écoulement tangentiel du combustible et du comburant par rapport à l'enveloppe du cylindre, et
- un système de conduites permettant de faire circuler un fluide de refroidissement à l'intérieur du brûleur.

12. Four de fusion de verre avec une zone d'introduction des matières vitrifiables, une zone de sortie de la matière fondue et, entre ces zones, une zone d'écoulement de la matière fondue, ledit four comprenant dans la zone d'écoulement de la matière fondue au moins un brûleur immergé selon l'une quelconque des revendications précédentes.

13. Procédé de fusion de matières vitrifiables utilisant un brûleur selon l'une quelconque des revendications 1 à 11, ledit procédé comprenant,
- l'introduction de matières vitrifiables dans la zone d'introduction de matières vitrifiables du four,
- l'alimentation du ou des brûleurs immergés avec un combustible gazeux, et avec un comburant gazeux,
- le soutirage de la matière fondue dans la zone de sortie des matières fondues, et
- la circulation d'un liquide de refroidissement dans les systèmes de conduites prévus à cet effet dans les parois du four et/ou dans le brûleur.

14. Procédé de fusion de matières vitrifiables selon la revendication 13, **caractérisé par le fait que** les matières vitrifiables comprennent de la roche, de préférence de la roche basaltique.

15. Procédé de fusion de matières vitrifiables selon la revendication 13 ou 14, **caractérisé par le fait que** la température de la roche fondue, immédiatement en amont de la zone de sortie du verre fondu, est comprise entre 1400 °C et 1600 °C.

## Patentansprüche

1. Tauchbrenner für einen Ofen zum Schmelzen von Glas oder Gestein, wobei der Brenner mindestens teilweise und vorzugsweise vollständig aus einer Legierung besteht, die die folgende Zusammensetzung aufweist, in Gewichtsprozent der Legierung:
| | |
|---|---|
| Cr | 11 bis 22 % |
| Ni | 5 bis 20 % |
| Mo | weniger als 6 %, |
| Mn | weniger als 3 %, |
| Si | weniger als 2 %, |
| N | weniger als 0,2 %, |
| P | weniger als 0,1 %, |
| S | weniger als 0,05 %, |
wobei der Rest aus Eisen, Kohlenstoff und unvermeidbaren Verunreinigungen besteht, wobei die Legierung **dadurch gekennzeichnet ist, dass** das Massenverhältnis Cr/C in der Legierung größer als 500 ist.

2. Tauchbrenner nach Anspruch 1, wobei das Massenverhältnis Cr/C in der Legierung größer als 530 ist.

3. Tauchbrenner nach einem der vorstehenden Ansprüche, wobei die Legierung mindestens 0,040 Gew.-% Kohlenstoff umfasst.

4. Tauchbrenner nach einem der vorstehenden Ansprüche, wobei die Legierung zwischen 7 und 16 Gew.-% Nickel umfasst.

5. Tauchbrenner nach einem der vorstehenden Ansprüche, wobei die Legierung zwischen 15 und 22 Gew.-% Chrom umfasst.

6. Tauchbrenner nach einem der vorstehenden Ansprüche, wobei die Legierung zwischen 60 und 75 Gew.-% Eisen umfasst.

7. Tauchbrenner nach einem der vorstehenden Ansprüche, wobei die Legierung mindestens 5 Gew.-% Molybdän umfasst.

8. Tauchbrenner nach einem der vorstehenden Ansprüche, wobei die Legierung zwischen 1 und 5 Gew.-% Molybdän umfasst.

9. Tauchbrenner nach einem der Ansprüche 1 bis 7, wobei die Legierung umfasst, in Gewichtsprozent der Legierung:
| | |
|---|---|
| Cr | 17 bis 20 % |
| Ni | 8 bis 10 % |
| Mo | weniger als 1 %, vorzugsweise weniger als 0,1 % |
| Mn | weniger als 3 % |
| Si | weniger als 2 % |
| N | weniger als 0,2 % |
| P | weniger als 0,1 %. |

10. Tauchbrenner nach einem der Ansprüche 1 bis 8, wobei die Legierung umfasst, in Gewichtsprozent der Legierung:
| | |
|---|---|
| Cr | 17 bis 20 % |
| Ni | 10 bis 15% |
| Mo | zwischen 2 und 4 % |
| Mn | weniger als 3 % |
| Si | weniger als 2 %, vorzugsweise weniger als 1 % |
| N | weniger als 0,2 % |
| P | weniger als 0,1 %. |

11. Tauchbrenner nach einem der vorstehenden Ansprüche, umfassend:
- eine Vielzahl von ausgerichteten Injektoren, jeder Injektor umfassend eine Mischkammer in Zylinderform, mit einer Ausstoßöffnung, einer Brennstoffversorgungsleitung und einer Sauerstoffträgerversorgungsleitung, die in der Mischkammer an dem Mantel des Zylinders entlang einer Richtung münden, die ein tangentiales Strömen des Brennstoffs und des Sauerstoffträgers relativ zu dem Mantel des Zylinders bewirkt, und
- ein Leitungssystem, das es ermöglicht, ein Kühlfluid im Inneren des Brenners zirkulieren zu lassen.

12. Glasschmelzofen mit einer Zone zum Einführen von verglasbaren Materialien, einer Zone zum Ablassen von geschmolzenem Material und einer Zone zum Strömen des geschmolzenen Materials zwischen diesen Zonen, der Ofen umfassend in der Zone zum Strömen des geschmolzenen Materials mindestens einen Tauchbrenner nach einem der vorstehenden Ansprüche.

13. Verfahren zum Schmelzen von verglasbaren Materialien unter Verwendung eines Brenners nach einem der vorstehenden Ansprüche 1 bis 11, das Verfahren umfassend,
- das Einführen von verglasbaren Materialien in die Zone zum Einführen von verglasbaren Materialien des Ofens,
- das Versorgen des oder der Tauchbrenner mit einem gasförmigen Brennstoff und mit einem gasförmigen Sauerstoffträger,
- das Entnehmen des geschmolzenen Materials in der Zone zum Ablassen von geschmolzenen Materialien, und
- das Zirkulieren einer Kühlflüssigkeit in den Leitungssystemen, die dafür in den Wänden des Ofens und/oder in dem Brenner vorgesehen sind.

14. Verfahren zum Schmelzen von verglasbaren Materialien nach Anspruch 13, **dadurch gekennzeichnet, dass** die verglasbaren Materialien Gestein, vorzugsweise Basaltgestein umfassen.

15. Verfahren zum Schmelzen von verglasbaren Materialien nach Anspruch 13 oder 14, **dadurch gekennzeichnet, dass** die Temperatur des geschmolzenen Gesteins unmittelbar stromaufwärts der Zone zum Ablassen von geschmolzenem Glas zwischen 1400 °C und 1600° C liegt.

## Claims

1. A submerged burner for a furnace for the melting of glass or of rock, said burner being, at least partially and preferably completely, formed of an alloy exhibiting the following composition, as percentage by weight of the alloy:
| | |
|---|---|
| Cr | 11% to 22% |
| Ni | 5% to 20% |
| Mo | less than 6%, |
| Mn | less than 3%, |
| Si | less than 2%, |
| N | less than 0.2%, |
| P | less than 0.1%, |
| S | less than 0.05%, |
the remainder being formed of iron, carbon and unavoidable impurities, said alloy being **characterized in that** the Cr/C ratio by weight in said alloy is greater than 500.

2. The submerged burner as claimed in claim 1, in which the Cr/C ratio by weight in said alloy is greater than 530.

3. The submerged burner as claimed in either of the preceding claims, in which the alloy comprises less than 0.040% by weight of carbon.

4. The submerged burner as claimed in one of the preceding claims, in which the alloy comprises between 7% and 16% by weight of nickel.

5. The submerged burner as claimed in one of the preceding claims, in which the alloy comprises between 15% and 22% by weight of chromium.

6. The submerged burner as claimed in one of the preceding claims, in which the alloy comprises between 60% and 75% by weight of iron.

7. The submerged burner as claimed in one of the preceding claims, in which the alloy comprises less than 5% by weight of molybdenum.

8. The submerged burner as claimed in one of the preceding claims, in which the alloy comprises between 1% and 5% by weight of molybdenum.

9. The submerged burner as claimed in claims 1 to 7, in which the alloy comprises, as percentage by weight of the alloy:
| | |
|---|---|
| Cr | 17% to 20% |
| Ni | 8% to 10% |
| Mo | less than 1%, preferably less than 0.1% |
| Mn | less than 3% |
| Si | less than 2% |
| N | less than 0.2% |
| P | less than 0.1%. |

10. The submerged burner as claimed in claims 1 to 8, in which the alloy comprises, as percentage by weight of the alloy:
| | |
|---|---|
| Cr | 17% to 20% |
| Ni | 10% to 15% |
| Mo | between 2% and 4% |
| Mn | less than 3% |
| Si | less than 2%, preferably less than 1% |
| N | less than 0.2% |
| P | less than 0.1%. |

11. The submerged burner as claimed in one of the preceding claims, comprising:
- a plurality of aligned injectors, each injector comprising a cylindrically shaped mixing chamber, with an ejection orifice, a pipe for feeding with fuel and a pipe for feeding with oxidant emerging in the mixing chamber at the jacket of the cylinder along a direction causing a tangential flow of the fuel and of the oxidant with respect to the jacket of the cylinder, and
- a system of pipes which makes it possible to circulate a cooling fluid inside the burner.

12. A furnace for the melting of glass with a zone for introduction of the vitrifiable substances, an outlet zone for the molten substance and, between these zones, a zone for flow of the molten substance, said furnace comprising, in the zone for flow of the molten substance, at least one submerged burner as claimed in any one of the preceding claims.

13. A process for the melting of vitrifiable substances using a burner as claimed in any one of claims 1 to 11, said process comprising:
- the introduction of vitrifiable substances into the zone for introduction of vitrifiable substances of the furnace,
- the feeding of the submerged burner or burners with a gaseous fuel and with a gaseous oxidant, preferably oxygen,
- the withdrawal of the molten substance in the outlet zone for the molten substances, and
- the circulation of a cooling liquid in the systems of pipes provided for this purpose in the walls of the furnace and/or in the burner.

14. The process for the melting of vitrifiable substances as claimed in claim 13, **characterized in that** the vitrifiable substances comprise rock, preferably basaltic rock.

15. The process for the melting of vitrifiable substances as claimed in claim 13 or 14, **characterized in that** the temperature of the molten rock, immediately upstream of the outlet zone for the molten glass, is between 1400°C and 1600°C.
